(19) Europäisches Patentamt
European Patent Office
Office européen des brevets

(11) EP 3 819 643 A1

(12) DEMANDE DE BREVET EUROPEEN

(43) Date de publication:
12.05.2021 Bulletin 2021/19

(51) Int Cl.:
G01P 15/097 (2006.01)
G01P 15/09 (2006.01)
G01P 15/18 (2013.01)
G01P 15/125 (2006.01)
G01P 15/093 (2006.01)

(21) Numéro de dépôt: 20205748.5

(22) Date de dépôt: 04.11.2020

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
KH MA MD TN

(30) Priorité: 06.11.2019 FR 1912443

(71) Demandeur: Commissariat à l'énergie atomique
et aux énergies alternatives
75015 Paris (FR)

(72) Inventeurs:
• DEFOORT, Martial
38054 GRENOBLE CEDEX 09 (FR)
• SANSA PERNA, Marc
38054 GRENOBLE CEDEX 09 (FR)
• HENTZ, Sébastien
38054 GRENOBLE CEDEX 09 (FR)

(74) Mandataire: Brevalex
95, rue d'Amsterdam
75378 Paris Cedex 8 (FR)

(54) **ACCELEROMETRE PERFORMANT PRESENTANT UN ENCOMBREMENT REDUIT**

(57) Accéléromètre microélectromécanique comportant un support (2) et une partie mobile (4) apte à être mise en vibration, des moyens de mesure (10) de l'amplitude de vibration de ladite partie mobile (4) dans au moins une direction de détection du plan de l'accéléromètre. L'accéléromètre comporte au moins un pied (6) ancré sur le support (2) par une première extrémité et fixé à la partie mobile (4) par une deuxième extrémité, et permettant à la partie mobile (4) de vibrer au moins le long de ladite au moins une direction de détection sous l'effet d'une force d'accélération.

FIG.1A

**Description**

**DOMAINE TECHNIQUE ET ÉTAT DE LA TECHNIQUE ANTÉRIEURE**

La présente invention se rapporte à un accéléromètre performant présentant un encombrement réduit.

Un accéléromètre comporte une partie suspendue qui est déplacée sous l'action d'une force subie par le système auquel est fixé l'accéléromètre. Le déplacement de la partie suspendue est mesuré, ce qui permet de remonter à l'accélération subie par le système. Il existe deux types d'accéléromètre, les accéléromètres statiques dont la partie suspendue est mise en mouvement uniquement du fait des forces appliquées au système, et les accéléromètres dynamiques qui sont mis en vibration à leur fréquence de résonance et dont on mesure la variation de la fréquence de résonance et on en déduit la force subie par le système.

Un accéléromètre se compose d'une partie mobile de masse m, d'un ressort de raideur k et d'un amortisseur qui définit les pertes du système.

Dans le cas d'un accéléromètre statique, celui-ci est utilisé jusqu'à sa fréquence de coupure qui va dépendre de sa fréquence de résonance. La fréquence de résonance s'écrit :

$$\omega_r = \sqrt{k/m},$$

avec k la raideur.

Or le gain d'un accéléromètre est inversement proportionnel à sa fréquence de résonance. Par conséquent un compromis est recherché entre la bande passante de l'accéléromètre et le gain. Le gain et la bande passante sont contrôlés par la masse de la partie suspendue et la raideur de l'accéléromètre.

Par conséquent, il est souhaitable de pouvoir optimiser la masse de la partie mobile et la raideur des moyens de suspension de manière indépendante.

Par ailleurs, on souhaite réaliser des accéléromètres présentant un encombrement réduit, notamment pour une application dans les smartphones.

La partie mobile et sa masse définissent la sensibilité de l'accéléromètre. Or, même en déterminant une masse minimale pour une application donnée, les moyens de suspension de la partie mobile qui s'étendent latéralement par rapport à la partie mobile et les moyens de détection du déplacement de la partie mobile augmentent la taille de l'accéléromètre et donc son encombrement. Par exemple, dans le cas d'un accéléromètre à détection dans le plan, les moyens de suspension sont formés par des ressorts s'étendant dans le plan entre les bords de la partie mobile et le substrat.

**EXPOSÉ DE L'INVENTION**

C'est par conséquent un but de la présente invention d'offrir un accéléromètre performant tout en présentant un encombrement réduit.

Le but énoncé ci-dessus est atteint par un accéléromètre linéaire comportant un support, au moins une partie mobile, la partie mobile étant suspendue au support au moyen d'au moins un pied ancré au support et se reliant à la partie mobile sur une zone de celle-ci en regard du support. Les moyens de détection du déplacement de la partie mobile sont situés au moins en partie sous la partie mobile.

Selon l'invention, on localise principalement la masse de la partie mobile au niveau de la partie mobile sismique et la raideur au niveau du ou des pieds, ce qui permet de découpler en partie la masse et la raideur, et de modifier la masse en agissant peu sur la raideur et inversement. On peut alors fixer la raideur et la masse au moins en partie de manière indépendante. Ainsi il est possible de régler de manière plus aisée la fréquence de coupure et le gain. En outre, les moyens de suspension ne s'étendant pas dans le plan de la partie mobile, un gain de place dans le plan peut être réalisé.

Il est possible de réduire l'encombrement général du capteur sans réduire la masse et donc sans diminuer la fréquence de résonance du système. En effet, il est possible de conserver la même masse et la même raideur dans un encombrement réduit et ainsi de ne pas réduire la fréquence de résonance.

L'accéléromètre selon l'invention présente l'avantage de présenter un encombrement réduit par rapport aux accéléromètres MEMS de l'état de la technique, tout en présentant des performances équivalentes.

D'une part, la structure de l'accéléromètre permet de découpler la partie mobile de la fréquence de résonance de la structure, et de modifier la fréquence de résonance en modifiant les dimensions et la forme du pied. D'autre part, le pied est fixé dans le substrat sous la structure, de façon à ce que toute la surface occupée par l'accéléromètre corresponde à la partie mobile. La géométrie du pied peut être modifiée sans affecter la place prise par l'accéléromètre. Par exemple, il est possible de réaliser des pieds de forme asymétrique afin de favoriser un axe de détection. En outre la forme du ou des pieds peut être modifiée sans modifier la forme de la partie mobile.

En découplant la partie mobile et ses moyens de suspension, il est possible de dimensionner l'accéléromètre pour qu'il occupe une petite surface tout en pouvant contrôler la fréquence de résonance du MEMS suivant les applications visées.

Selon un exemple, au moins une partie des moyens de détection est située sous la masse de sorte qu'ils détectent directement les vibrations de la partie mobile, entre le pied et le support. Il peut s'agir de moyens capacitifs, de moyens piézoélectriques ou très avantageusement de moyens optomécaniques.

En d'autres termes, les moyens de suspension sont réalisés dans un plan différent du plan dans lequel la partie mobile est destinée à se déplacer, ainsi que les moyens de détection, ce qui permet de réduire l'encombrement du capteur

La présente invention s'applique à la fois aux accéléromètres statiques et aux accéléromètres dynamiques. Dans ce dernier cas, les moyens d'excitation et les moyens de détection sont situés au niveau du pied de sorte que la surface occupée par gyromètre soit égale à la surface de la partie mobile.

La présente invention a alors pour objet un accéléromètre microélectromécanique comportant un support et une partie mobile apte à être mise en vibration par rapport au support, des moyens de mesure de l'amplitude de vibration de ladite partie mobile dans au moins une direction de détection contenue dans le plan de l'accéléromètre, l'accéléromètre comportant au moins un pied ancré sur le support par une première extrémité et fixé à la partie mobile par une deuxième extrémité, et permettant à la partie mobile de vibrer au moins le long de ladite au moins une direction de détection sous l'effet d'une force d'accélération, lesdits moyens de mesure étant situés au moins en partie sous la partie mobile.

De préférence, le au moins un pied présente une section dans le plan de l'accéléromètre inférieure à la surface de la partie mobile dans le plan de l'accéléromètre.

Dans un exemple de réalisation, l'accéléromètre comporte plusieurs pieds ancrés sur le support par une première extrémité et fixés à la partie mobile par une deuxième extrémité, et la somme des sections des pieds dans le plan de l'accéléromètre est inférieure à la surface de la partie mobile dans le plan de l'accéléromètre.

De manière préférée la surface de la section du au moins un pied ou la somme des surfaces des sections des pieds dans le plan de l'accéléromètre est inférieure ou égale à 10% de la surface de la partie mobile.

Selon une caractéristique additionnelle, la partie mobile et/ou le au moins un pied présentent une forme favorisant au moins une direction de vibration de la partie mobile correspondant à la au moins une direction de détection.

Par exemple, le au moins un pied a une section circulaire ou carrée dans le plan de l'accéléromètre.

La section du au moins un pied dans le plan de l'accéléromètre peut présenter une dimension plus faible dans la direction de détection par rapport à la dimension dans une direction orthogonale à la direction de détection.

Dans un exemple de réalisation, la partie mobile est de forme carrée dans le plan de l'accéléromètre ou cylindrique de révolution d'axe normal au plan de l'accéléromètre et l'accéléromètre présente deux axes de détection.

L'accéléromètre peut comporter des moyens d'excitation configurés pour mettre en vibration la partie mobile à sa fréquence de résonance, et les moyens de mesure sont configurés pour mesurer une variation de la fréquence de résonance.

Dans un exemple de réalisation, les moyens de mesure comportent un résonateur optique disposé par rapport à la partie mobile de sorte que la partie mobile se trouve au moins en partie dans le champ évanescent du résonateur optique au moins dans la direction de détection, des moyens pour injecter un signal lumineux dans le résonateur et des moyens pour collecter un signal lumineux sortant du résonateur optique.

Dans un autre exemple de réalisation, les moyens de mesure comportent des moyens capacitifs comportant au moins une électrode portée par la partie mobile et une électrode portée par le support

Encore dans un autre exemple de réalisation, les moyens de mesure comportent des moyens piézoélectriques et/ou piézorésistifs comportant au moins une poutre suspendue entre le pied et le support.

La partie mobile peut avantageusement comporter au moins un matériau présentant une masse volumique élevée, et le pied est en un matériau rigide.

La présente invention a également pour objet un système de mesure d'une accélération comportant une pluralité d'accéléromètres selon l'invention, chaque partie mobile comportant au moins deux bords dans le plan du système, chacun des bords étant directement en regard d'un bord d'une partie mobile d'un accéléromètre adjacent.

**BRÈVE DESCRIPTION DES DESSINS**

La présente invention sera mieux comprise sur la base de la description qui va suivre et des dessins en annexe sur lesquels :

La figure 1A est une représentation schématique en perspective d'un exemple de réalisation d'un accéléromètre selon l'invention.

La figure 1B est une vue de côté du accéléromètre de la figure 1A la partie mobile étant en mouvement.

La figure 2 est une représentation schématique d'une vue de dessus d'un autre exemple de réalisation d'un accéléromètre selon l'invention.

Les figures 3A et 3B sont des représentations schématiques de vues en perspective d'autres exemples de réalisation d'un accéléromètre selon l'invention.

La figure 4 est une représentation schématique d'une vue de dessus d'un autre exemple de réalisation d'un accéléromètre selon l'invention comportant deux pieds.

La figure 5 est une représentation schématique d'une vue de dessus d'un exemple de réseau d'accéléromètres selon l'invention.

La figure 6A est une vue de dessus représentée schématiquement d'un exemple d'accéléromètre avec des moyens de détection capacitifs.

La figure 6B est une vue de dessus représentée schématiquement d'un autre exemple d'accéléromètre avec des moyens de détection capacitifs.

La figure 7 est une vue de dessus représentée schématiquement d'un exemple d'accéléromètre avec des moyens de détection piézorésistifs.

La figure 8 est une vue de dessus représentée schématiquement d'un exemple d'accéléromètre avec des moyens de détection optomécaniques.

Les figures 9B, 9C, 9D, 9E, 9F et 9G sont des représentations schématiques d'éléments obtenus au cours des différentes étapes d'un exemple de procédé de réalisation d'un accéléromètre selon l'invention.

## EXPOSÉ DÉTAILLÉ DE MODES DE RÉALISATION PARTICULIERS

L'accéléromètre est un système microélectromécanique ou MEMS (Microelectromechanical system en terminologie anglo-saxonne) et/ou nanoélectromécanique ou NEMS (Nanoelectromechanical system en terminologie anglo-saxonne). Dans la suite un système microélectromécanique désigne un système microélectromécanique et/ou nanoélectromécanique.

L'accéléromètre linéaire selon l'invention est capable de déterminer au moins une accélération dans une direction dans le plan. Dans des exemples particuliers, il permet de déterminer des accélérations dans deux directions dans le plan de l'accéléromètre.

On entend par « plan de l'accéléromètre », le plan moyen de celui-ci qui est parallèle au support. Le support de l'accéléromètre est formé par le substrat utilisé pour la fabrication par des techniques de la microélectronique.

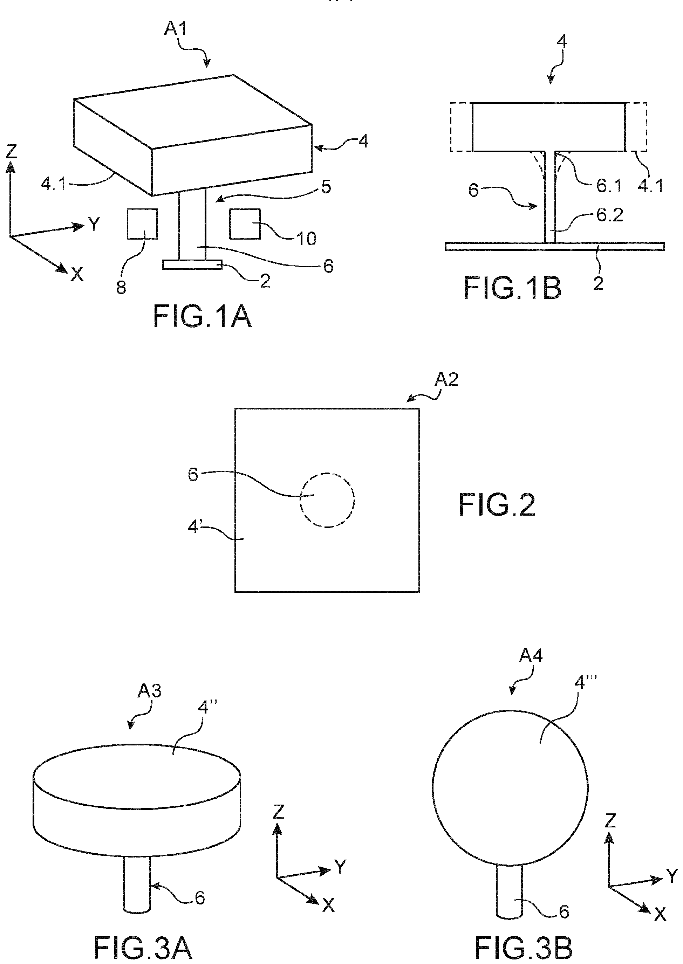

Sur les figures 1A et 1B, on peut voir un exemple d'accéléromètre A1.

L'accéléromètre A1 comporte un support 2, une partie mobile 4 et des moyens de suspension 5 de la partie mobile 4. La partie mobile 4 se déplace principalement dans le plan XY de l'accéléromètre.

Dans cet exemple de réalisation, les moyens de suspension 5 comportent un pied 6 ancré sur le support par une première extrémité longitudinale 6.1 et fixé à la partie mobile 4 par une deuxième extrémité longitudinale 6.2. Le pied est fixé à la partie mobile 4 au niveau d'une face 4.1 de celle-ci en regard du support 2.

Dans l'exemple représenté, la partie mobile 4 a une forme de parallélépipède rectangle, l'une des faces de plus grande surface étant en regard du substrat, et le pied s'étend longitudinalement dans une direction Z orthogonale au plan XY. En outre les côtés de plus grande dimension s'étendent dans la direction Y.

Dans cet exemple, le pied a une section circulaire dans le plan XY et est de section constante le long de la direction Z.

Le pied 6 est tel qu'il est apte à se déformer en flexion pour permettre à la partie mobile de se déplacer et de vibrer dans le plan XY, au moins sous l'action d'une force extérieure.

Sur la figure 1B, on peut voir représenté schématiquement un mode de vibration du résonateur de la figure 1A, qui a lieu essentiellement dans le plan XY. Il sera compris que, puisque le pied est déformé en flexion et ne s'allonge pas, la partie mobile a un déplacement hors-plan, mais celui-ci est très faible, il n'est pas détecté et ne perturbe pas la mesure du déplacement dans le plan de la partie mobile.

Grâce à l'invention, la rigidité est réglée principalement par les caractéristiques du pied, tandis que la masse de l'accéléromètre est fixée principalement par les dimensions de la partie mobile.

La partie mobile et le pied sont configurés pour former un résonateur présentant au moins un mode de vibration dans la direction de l'accélération que l'on souhaite déterminer.

Dans cet exemple, l'accéléromètre est tel qu'il favorise un axe de vibration, afin de réduire le couplage avec les autres modes et le bruit qui en résulte.

Dans l'exemple représenté, la partie mobile de forme rectangulaire orientée dans la direction Y forme un résonateur favorisant l'axe de vibration Y.

De préférence, la partie mobile et le pied présentent au moins un axe de symétrie dans la plan XY, l'accéléromètre étant orienté pour que la direction de la ou des accélérations à déterminer soient alignées avec le ou les axes de symétrie de la partie mobile.

Le pied est fixé au centre de la face de la partie mobile en regard du support. Sur la figure 1A, le pied 6 est fixé à la partie mobile au point d'intersection des diagonales de la face de la partie mobile.

Dans l'exemple de la figure 2, l'accéléromètre A2 comporte une partie mobile 4' en forme de parallélépipède à section carrée (dans le plan du capteur) et un pied 6 à section circulaire, l'accéléromètre permet de déterminer les accélérations dans les directions X et Y avec la même sensibilité.

En variante, la partie mobile est cubique, prismatique rectangulaire ou hexagonale.

Dans un autre exemple, la partie mobile et le pied présentent une symétrie centrale par rapport à la direction hors-plan. Par exemple, l'accéléromètre A3 comporte une partie mobile 4" présentant une forme cylindrique de révolution autour de l'axe Z (figure 3A) et l'accéléromètre A4 comporte une partie mobile de forme sphérique 4'" (figure 3B). Les accéléromètres A3 et A4 permettent de déterminer les accélérations dans toutes les directions du plan XY.

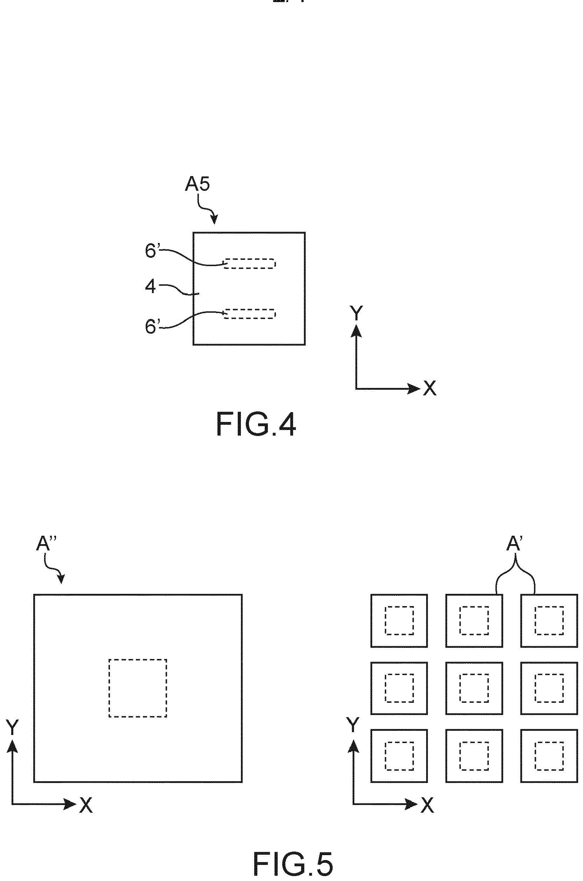

Sur la figure 4, on peut voir un autre exemple de structure d'accéléromètre A5 comportant deux pieds.

Les deux pieds ont des sections rectangulaires dans le plan XY et leur longueur est orientée dans la direction X. Les deux pieds 6' sont parallèles. Cette forme de pied et leur orientation favorisent la détection selon la direction Y dans laquelle les pieds présentent une plus grande souplesse par rapport à la direction X.

De préférence la surface totale de la section du pied unique ou des pieds est inférieure ou égale à 10% de la surface de la partie mobile, ce qui permet de réaliser une structure peu rigide.

Par exemple, la partie mobile a une surface comprise entre 1 $\mu$m x1 $\mu$m jusqu'à 500 $\mu$m x500$\mu$m, et une épaisseur comprise entre 1 $\mu$m et 500 $\mu$m. La surface totale de la section du ou des pieds supportant la partie mobile est inférieure à la surface de la partie mobile dans le plan de l'accéléromètre. La section de chaque pied peut être comprise entre 50 nm x50 nm et 100 $\mu$m x100 $\mu$m. La longueur des pieds est de préférence au moins égale à ses dimensions latérales, et elle peut être comprise entre 50 nm et 100 $\mu$m.

En outre le ou les pieds et la partie mobile peuvent être réalisés dans le même matériau ou dans des matériaux différents, permettant de choisir les matériaux optimisant les fonctions du ou des pieds et de la partie mobile. Par exemple, la partie mobile peut être réalisée dans un matériau présentant une masse volumique élevée afin de maximiser la masse et donc l'effet des forces d'accélération sur la partie mobile. Par exemple, on choisit du silicium qui a une masse volumique de 2300 kg/m$^3$ ou bien du tantale, qui a une masse volumique de 16690 kg/m$^3$.

De manière avantageuse, le ou les pieds sont réalisés en un matériau rigide, i.e. présentant un module d'Young élevé, de plus de 100 GPa. En outre, avantageusement il s'agit d'un matériau isotrope, par exemple cristallin, de sorte à offrir le même comportement dans la direction d'excitation et dans la direction de détection. Par exemple, on choisit du silicium, qui est un matériel cristallin avec un module d'Young de 130-188 GPa.

Le support, le ou les pieds et la partie mobile peuvent être réalisés dans le même matériau ou des matériaux différents.

L'accéléromètre comporte également des moyens de mesure de l'amplitude d'au moins un de ses modes de vibration.

Ces moyens de mesure mesurent le déplacement de la partie mobile.

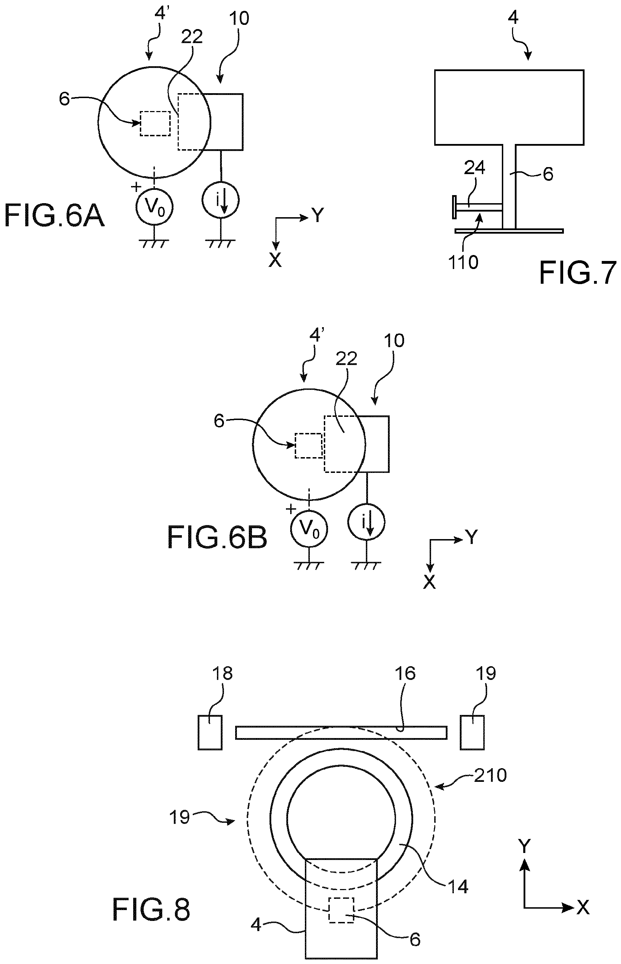

Sur la figure 6A, on peut voir un exemple d'accéléromètre selon l'invention mettant en œuvre des moyens de mesure 10 de type capacitif. Dans cet exemple, ils comportent une électrode 22 disposée à proximité de la partie mobile 4' de sorte que la distance entre la partie mobile 4' et l'électrode 22 varie lorsque la partie mobile 4' se déplace dans la direction de détection Y. On suppose que la partie mobile 4' est conductrice électrique et forme directement l'autre électrode. Sinon une couche conductrice électrique est réalisée pour former l'autre électrode. La partie mobile et l'électrode sont séparées par de l'air ou du vide formant un diélectrique, et forment un condensateur dont la capacité varie avec le déplacement de la partie mobile le long de la direction Y. L'électrode ou la partie mobile est polarisée, par exemple à 0 V. La vibration de la partie mobile du fait des forces d'accélération dans la direction Y, provoque une variation de la capacité du condensateur, et crée un courant proportionnel à l'amplitude de vibration de la partie mobile à travers l'électrode. Les moyens de détection comportent des moyens pour mesurer ce courant, par exemple un amplificateur de transimpédance et un analyseur de spectres. A partir de ce courant, il est possible de remonter à l'accélération subie par le système auquel est fixé l'accéléromètre. L'électrode est située au moins en partie sous la partie mobile, ce qui réduit l'encombrement de l'accéléromètre. Dans l'exemple de la figure 6A, l'électrode 22 est en regard du pied 6 et c'est une variation d'entrefer que l'on mesure. Dans un autre exemple l'électrode 22 est en regard de la face inférieure de la partie mobile 4', on mesure alors une variation de surface (figure 6B).

Plusieurs électrodes peuvent être mises en œuvre, par exemple pour réaliser une mesure différentielle. Pour cela, au moins une première électrode est disposée en regard du pied et une autre deuxième électrode est disposée en regard du pied à l'opposé de la première électrode par rapport au pied, les première et deuxième électrodes étant alignées le long de la direction de détection. Ainsi, lorsque la partie mobile vibre, le pied vibre également et les capacités des condensateurs varient de manière inverse, permettant une mesure différentielle.

Les moyens de mesure capacitifs sont particulièrement adaptés aux accéléromètres destinés à détecter de faibles accélérations.

Dans un autre exemple de réalisation représenté sur la figure 7, les moyens de détection 110 sont de type piézorésistif. Par exemple les moyens de détection comportent une poutre 24 en matériau piézorésistif suspendue entre le substrat et le pied ou entre le substrat et la partie mobile, une tension constante est appliquée à la poutre 24, la compression et l'extension subies par la poutre provoquent une variation de la résistance électrique de la poutre. Le courant de sortie est alors proportionnel à la résistance des poutres, qui varie à la fréquence de vibration du résonateur. Plusieurs poutres piézorésistives peuvent être mises en œuvre, par exemple pour réaliser une mesure différentielle. Le pied peut servir à conduire le courant ou une piste conductrice est formée le long du pied.

Les poutres peuvent être en matériaux piézorésistifs et/ou piézoélectriques. Les moyens de mesure piézorésistifs et/ou piézoélectriques sont particulièrement adaptés à la mesure de fortes accélérations.

La mise en œuvre de poutres entre le pied et le substrat permet de limiter l'encombrement de l'accéléromètre, on peut voir un exemple avantageux d'un accéléromètre selon l'invention vu de dessus.

Dans cet exemple les moyens de détection sont de type optomécanique.

Les moyens de détection 210 comportent un résonateur optique 14, dans cet exemple un anneau disposé par rapport au pied de l'accéléromètre de sorte qu'il se déplace dans le champ évanescent (symbolisé par le cercle en pointillés) de l'anneau, qui est typiquement de l'ordre de plusieurs centaines de nanomètres pour une lumière avec une longueur d'onde de 1550 nm. Dans cet exemple le pied est situé à une distance comprise entre 50 nm et 200 nm du bord de l'anneau. Ils comportent également un guide d'onde 16 situé à proximité de l'anneau, et destiné à injecter un signal lumineux d'entrée dans le résonateur et à récupérer un signal lumineux de sortie. Une source 18 génère le signal lumineux dans le guide d'onde, par exemple à une extrémité du guide d'onde et un détecteur 19, par exemple à l'autre extrémité du guide d'onde, collecte le signal lumineux sortant de l'anneau.

La partie mobile est mise en mouvement le long de la direction Y, sous l'effet des forces d'accélération dans le champ évanescent de l'anneau, ce qui a pour effet de mettre en vibration le pied et de modifier les propriétés optiques du résonateur optique, et notamment sa fréquence de résonance optique, il en résulte une modulation de l'intensité de la lumière proportionnelle au mouvement de la partie mobile. Par exemple, le détecteur utilise des techniques spectrométriques, il est possible de détecter cette modulation d'intensité du signal lumineux de sortie. A partir de ces mesures, il est possible de remonter à l'accélération.

En variante, un guide d'onde pour le signal lumineux d'entrée et un guide d'onde pour collecter le signal lumineux de sortie sont mis en œuvre.

Dans un autre exemple, un résonateur optique est mis en œuvre pour détecter les déplacements selon Y de plusieurs résonateurs mécaniques, par exemple les parties mobiles sont disposées autour de l'anneau dans le champ évanescent de celui-ci. Dans ce cas, des techniques de multiplexage, par exemple multiplexage de temps ou bien multiplexage de fréquence de résonance, sont mises en place pour distinguer le déplacement de chaque partie mobile.

En variante, l'anneau est remplacé par un disque optique.

Dans un autre exemple de détection optique, le mouvement du résonateur est mesuré avec des techniques d'interférométrie. Dans ce cas, une source de lumière laser est séparée en deux chemins différents, un des chemins contenant le résonateur optique et le MEMS résonant et l'autre agissant comme chemin de référence. Quand le MEMS fait varier la fréquence de résonance optique, il module aussi la phase de la lumière en sortie du résonateur. Quand on combine la lumière en sortie du résonateur avec le chemin de référence, l'interférence entre les deux signaux provoque une modulation de l'intensité de la lumière de sortie proportionnelle au mouvement du MEMS.

La mise en œuvre de moyens de détection optomécanique permet d'améliorer les performances de l'accéléromètre par rapport à des moyens de détection électrique. En effet ils permettent de mesurer avec précision le mouvement de masses plus petites, et donc d'atteindre une bande passante plus élevée que celle atteignable par des moyens de détection électrique.

Les exemples décrits ci-dessus sont des accéléromètres statiques, dont la partie mobile est mise en mouvement uniquement par les forces d'accélération. L'invention s'applique également aux accéléromètres fonctionnant à la résonance pour lesquels la partie mobile est mise en vibration à sa fréquence de résonance et la variation de la fréquence de résonance suite à l'accélération est mesurée, ce qui permet de déterminer l'accélération. La fréquence de résonance de la partie mobile est celle de l'ensemble partie mobile et pied.

L'accéléromètre résonant comporte des moyens d'excitation pour mettre en vibration la partie mobile, par exemple il s'agit de moyens électrostatiques agissant directement sur la partie mobile, ou des moyens thermiques agissant par exemple sur le ou les pieds.

Dans un exemple de réalisation, les moyens d'excitation comportent au moins une électrode portée par le support et une électrode portée ou formée par le pied ou la partie mobile, de sorte à appliquer une force électrostatique au pied ou à la partie mobile dans la première direction.

Dans un autre exemple de réalisation, les moyens d'excitation comportent au moins une poutre en matériau piézoélectrique suspendue entre le substrat et le pied, orientée de sorte à appliquer une force mécanique au pied dans la première direction. Lorsque les moyens de mesure de l'amplitude de vibration comportent des poutres piézoélectriques ou piézorésistives, la même poutre peut servir à l'actionnement dans une direction et à la détection dans cette direction, de préférence la poutre est parallèle à cette direction. Au moins une poutre est prévue pour l'excitation dans une direction et une poutre est prévue pour la détection dans une autre direction. Par exemple une poutre parallèle à la direction X sert à l'excitation et à la détection dans la direction X et une poutre sert à l'excitation et à la détection dans la direction Y. Ainsi avec deux poutres on réalise un accéléromètre deux axes.

Nous allons maintenant donner des exemples de dimensions de la partie mobile et des piliers pour différentes structures et leur fréquence de résonance. Ces exemples ne sont en aucun cas limitatifs.

Considérons un accéléromètre selon l'exemple de la figure 3A, le pied a une section dans le plan XY de diamètre 1 μm et une longueur le long de l'axe Z de 2 μm. La partie mobile de forme cylindrique a un diamètre de 5 μm et une épaisseur de 3 μm. La structure possède une infinité de directions de vibration privilégiées dans le plan YX, toutes-à une fréquence de résonance de 9 MHz. Cet accéléromètre peut être un accéléromètre statique ou un accéléromètre résonant.

Considérons un accéléromètre comportant deux pieds cylindriques et une partie mobile en forme de prisme carré. Les pieds sont attachés à la partie mobile au niveau de la médiatrice orthogonale à la direction de détection, symétriquement par rapport à la direction de détection. Les côtés de la partie mobile possèdent une section de 5 μm de côté et une épaisseur de 3 μm. Les pieds ont une section de diamètre 1 μm et une longueur

de 2 µm, séparé d'une distance de 3 µm entre les axes des pieds. La structure possède une direction de vibration privilégiée, dont la fréquence de résonance est de 11 MHz, alors que l'axe perpendiculaire possède une fréquence de résonance de 37 MHz, réduisant d'un ordre de grandeur sa détection face à l'axe privilégié. Cet accéléromètre peut être un accéléromètre statique ou un accéléromètre résonant.

Sur la figure 5, on peut voir un exemple d'un réseau d'accéléromètres A'. Les accéléromètres A', au nombre de 9 dans l'exemple représenté, sont répartis en lignes et en colonnes. Leur forme est identique à celle de l'accéléromètre de la figure 1A. La surface totale de ce réseau de neuf petits accéléromètres A' est identique à celle d'un seul accéléromètre A" représenté sur la gauche sur la figure 5 avec une masse très proche.

Grâce à la structure des accéléromètres selon l'invention, les parties mobiles des accéléromètres A' sont disposées les unes à côté des autres avec au moins deux de leurs faces latérales directement en regard de faces latérales des accéléromètres adjacents, aucun moyen de suspension ne s'interpose entre les accéléromètres. La densité d'accéléromètres peut alors être importante. D'autres dispositions et formes de parties mobiles peuvent être envisagées.

Dans un exemple avantageux où la raideur des accéléromètres est proche ou identique à celle du capteur unique, la somme des gains des accéléromètres est proche du gain du capteur unique. Cependant le bruit thermomécanique du réseau et donc le rapport signal/bruit est réduit d'un facteur $\sqrt{N}$, N étant le nombre de capteurs. La fréquence de résonance et également la fréquence de coupure sont augmentées d'un facteur $\sqrt{N}$, ce qui est avantageux pour des accéléromètres dédiés aux fortes accélérations.

Grâce à la structure des accéléromètres selon l'invention, il est donc possible de réaliser une matrice combinant des résonateurs identiques, de faibles dimensions par exemple 1 µm x 1 µm, tout en formant une structure totale présentant des dimensions extérieures par exemple de 500 µm x 500 µm.

Alternativement, on peut réaliser un réseau de N accéléromètres présentant la même fréquence de résonance qu'un seul grand accéléromètre et fournissant un signal de sortie augmentée par rapport à celui du grand accéléromètre.

Les N capteurs peuvent être tous sensibles à la même direction, par exemple la direction X, ou être sensibles à des directions différentes les unes des autres permettant la détection des accélérations dans les deux directions. Par exemple N/2 capteurs sont sensibles à la direction X et N/2 capteurs sont sensibles à la direction Y.

En outre, comme expliqué ci-dessous les accéléromètres peuvent être adaptés à détecter de faibles accélérations ou des fortes accélérations. Les capteurs peuvent comporter des moyens de mesure différents les uns des autres.

Un réseau d'accéléromètres de petite taille peut permettre de mesurer plusieurs directions d'accélération et/ou plusieurs intensités d'accélération, tout en ne présentant pas un encombrement supérieur à un accéléromètre de l'état de la technique.

Les moyens de mesure de chaque accéléromètre peuvent être indépendants les uns des autres. De manière avantageuse, les signaux des moyens de mesure et éventuellement ceux des moyens d'excitation sont multiplexés, afin de réduire la connectique et l'encombrement des moyens de mesure.

Par exemple, dans le cas de moyens de détection optique, un disque ou un anneau optique associé à chaque partie mobile est prévu et un seul guide d'onde injecte un signal lumineux d'entrée dans tous les disques ou anneaux et récupère tous les signaux lumineux de sortie.

Dans le cas de moyens de mesure de type capacitif ou de type piézoélectrique, on peut envisager de réaliser des accéléromètres de sorte qu'ils aient des amplitudes de vibration différentes.

Dans le cas d'accéléromètres résonants, leurs fréquences de résonance peuvent être différentes.

L'accéléromètre selon l'invention est particulièrement adapté à une disposition en lignes et en colonnes du fait de son emprise au sol réduite.

En outre, la structure de l'accéléromètre selon l'invention est avantageusement compatible avec une méthode de détection optomécanique. Cette méthode de détection étant particulièrement performante, il est possible d'augmenter la bande passante du capteur, i.e. il est possible de réduire sa taille ou d'augmenter sa rigidité, sans perte de performance.

Un exemple de procédé de réalisation d'un accéléromètre selon l'invention va maintenant être décrit.

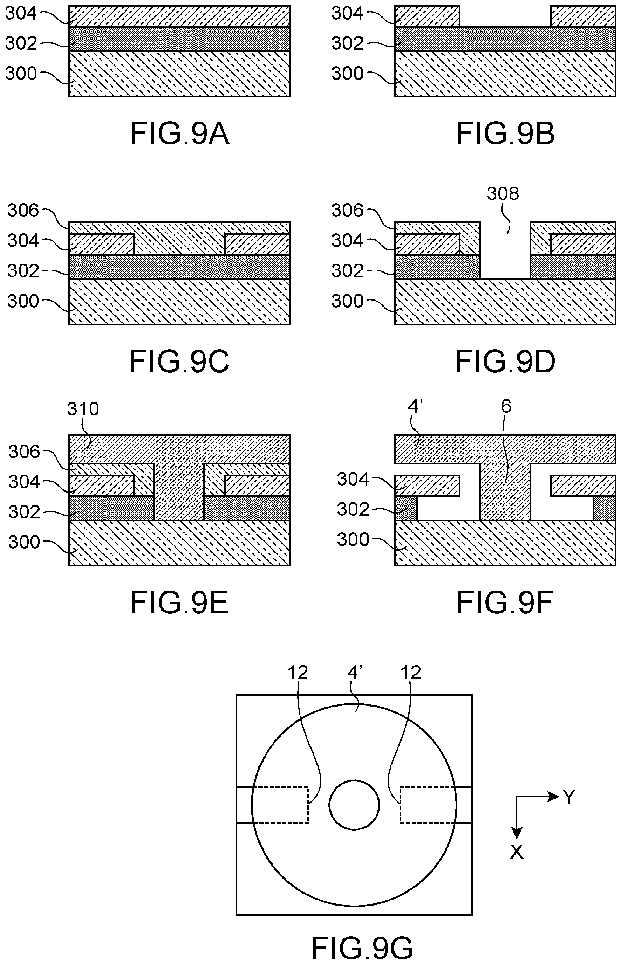

A partir d'une plaque Silicium-sur-Isolant ou SOI (Silicon On Insulator en terminologie anglo-saxonne) (figure 9A), comprenant un substrat en silicium 300, une couche en SiO$_2$ 302 et une couche de silicium monocristallin 304 ; on structure la couche 304 pour former les électrodes, par exemple par photolithographie et gravure.

L'élément ainsi obtenu est représenté sur la figure 9B.

Lors d'une étape suivante on forme une couche sacrificielle 306, par exemple en SiO$_2$, par exemple par dépôt, par exemple, par dépôt chimique en phase vapeur, ou par oxydation.

L'élément ainsi obtenu est représenté sur la figure 9C

Lors d'une étape suivante, on structure la couche sacrificielle 306 pour former le pied, pour cela on réalise une cavité 308 débouchant sur le substrat 300, par exemple par photolithographie et gravure.

L'élément ainsi obtenu est représenté sur la figure 9D.

Lors d'une étape suivante, on forme dans la cavité 308 et sur la couche sacrificielle 306 une couche de matériau semi-conducteur 310, par exemple du silicium amorphe. La couche 310 est par exemple formée par dépôt, par exemple par un dépôt chimique en phase vapeur. L'épaisseur de la couche 310 sur la couche sacrificielle 306 est avantageusement celle de la partie mobile que l'on souhaite réaliser.

L'élément ainsi obtenu est représenté sur la figure 9E.

Lors d'une étape suivante, la couche 310 est structurée pour délimiter la partie mobile. Des tranchées débouchant sur la couche sacrificielle 306 sont formées délimitant le bord extérieur de la partie mobile. Cette structuration est par exemple réalisée par photolithographie et gravure, par exemple une gravure ionique réactive ou bien une gravure de KOH en phase liquide.

Lors d'une étape suivante, la partie mobile 4'et son pied 6 sont libérés en gravant la couche sacrificielle 306 et la couche de $SiO_2$ 302, par exemple par gravure humide par exemple avec de l'acide fluorhydrique. La distance de gravure est choisie de façon que les électrodes au niveau du pied ne soient pas complètement libérées.

L'élément ainsi obtenu est représenté sur la figure 9F.

L'élément est également représenté sur la figure 9G (vue de dessus). On peut voir que simultanément le substrat a été structuré pour réaliser des électrodes en regard du pied alignées avec la direction Y, par exemple pour former des moyens de mesure de déplacement de la partie mobile.

Dans un autre exemple de réalisation, la couche 31O en silicium amorphe est rendue conductrice, par exemple par dopage et traitement thermique, par exemple pour utiliser la masse dans la détection du déplacement.

Dans un autre exemple de réalisation, une couche supplémentaire est formée sur la couche 310, par exemple en un matériau présentant une masse volumique élevée par exemple du tungstène, pour augmenter la masse de la partie mobile et ainsi améliorer la performance de l'accéléromètre.

Les différents exemples de réalisation peuvent être combinés : les différentes formes de la partie mobile, les différentes formes et/ou le nombre de pieds supportant la partie mobile et/ou les moyens de mesure peuvent être combinés.

## Revendications

1. Accéléromètre microélectromécanique comportant un support (2) et une partie mobile (4, 4') apte à être mise en vibration par rapport au support, des moyens de mesure (10, 110, 210) de l'amplitude de vibration de ladite partie mobile (4, 4') dans au moins une direction de détection contenue dans le plan de l'accéléromètre, l'accéléromètre comportant au moins un pied (6, 6') ancré sur le support (2) par une première extrémité et fixé à la partie mobile (4, 4') par une deuxième extrémité, et permettant à la partie mobile (4, 4') de vibrer au moins le long de ladite au moins une direction de détection sous l'effet d'une force d'accélération, lesdits moyens de mesure étant situés au moins en partie sous la partie mobile.

2. Accéléromètre selon la revendication 1, dans lequel le au moins un pied (6, 6') présente une section dans le plan de l'accéléromètre inférieure à la surface de la partie mobile (4, 4') dans le plan de l'accéléromètre.

3. Accéléromètre selon la revendication 1 ou 2, comportant plusieurs pieds (6, 6') ancrés sur le support par une première extrémité et fixés à la partie mobile (4, 4') par une deuxième extrémité, et dans lequel la somme des sections des pieds dans le plan de l'accéléromètre est inférieure à la surface de la partie mobile dans le plan de l'accéléromètre.

4. Accéléromètre selon la revendication 2 ou 3, dans lequel la surface de la section du au moins un pied (6, 6') ou la somme des surfaces des sections des pieds dans le plan de l'accéléromètre est inférieure ou égale à 10% de la surface de la partie mobile.

5. Accéléromètre selon l'une des revendications 1 à 4, dans lequel la partie mobile (4, 4') et/ou le au moins un pied (6, 6') présentent une forme favorisant au moins une direction de vibration de la partie mobile (4, 4') correspondant à la au moins une direction de détection.

6. Accéléromètre selon l'une des revendications précédentes, dans lequel le au moins un pied (6, 6') a une section circulaire ou carrée dans le plan de l'accéléromètre.

7. Accéléromètre selon la revendication 5, dans lequel la section du au moins un pied (6') dans le plan de l'accéléromètre présente une dimension plus faible dans la direction de détection par rapport à la dimension dans une direction orthogonale à la direction de détection.

8. Accéléromètre selon l'une des revendications 1 à 6, dans lequel la partie mobile (4') est de forme carrée dans le plan de l'accéléromètre ou cylindrique de révolution d'axe normal au plan de l'accéléromètre et dans lequel l'accéléromètre présente deux axes de détection.

9. Accéléromètre selon l'une des revendications 1 à 8, comportant des moyens d'excitation configurés pour mettre en vibration la partie mobile à sa fréquence de résonance, et dans lequel les moyens de mesure sont configurés pour mesurer une variation de la fréquence de résonance.

10. Accéléromètre selon l'une des revendications précédentes, dans lequel les moyens de mesure (210) comportent un résonateur optique (14) disposé par rapport à la partie mobile (4) de sorte que la partie mobile (4) se trouve au moins en partie dans le champ évanescent du résonateur optique (14) au moins dans la direction de détection, des moyens pour injecter un signal lumineux dans le résonateur et des moyens pour collecter un signal lumineux sortant du résonateur optique.

11. Accéléromètre selon l'une des revendications 1 à 9, dans lequel les moyens de mesure comportent des moyens capacitifs comportant au moins une électrode portée par la partie mobile et une électrode portée par le support.

12. Accéléromètre selon l'une des revendications 1 à 9, dans lequel les moyens de mesure comportent des moyens piézoélectriques et/ou piézorésistifs comportant au moins une poutre suspendue entre le pied et le support.

13. Accéléromètre selon l'une des revendications précédentes, dans lequel la partie mobile (4) comporte au moins un matériau présentant une masse volumique élevée, et le pied est en un matériau rigide.

14. Système de mesure d'une accélération comportant une pluralité d'accéléromètres (A') selon l'une des revendications 1 à 13, chaque partie mobile comportant au moins deux bords dans le plan du système, chacun des bords étant directement en regard d'un bord d'une partie mobile d'un accéléromètre adjacent.

FIG.1A

FIG.1B

FIG.2

FIG.3A

FIG.3B

A5

6'

4

6'

Y

X

FIG.4

A"

A'

Y

X

Y

X

FIG.5

FIG.6A

FIG.7

FIG.6B

FIG.8

304
302
300

FIG.9A

304
302
300

FIG.9B

306
304
302
300

FIG.9C

308

306
304
302
300

FIG.9D

310

306
304
302
300

FIG.9E

4'    6

304
302
300

FIG.9F

12    4'    12

Y

X

FIG.9G

Europäisches
Patentamt

European
Patent Office

Office européen
des brevets

**RAPPORT DE RECHERCHE EUROPEENNE**

Numéro de la demande

EP 20 20 5748

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>Y | EP 2 435 789 A1 (UNIV KING ABDULLAH SCI & TECH [SA]) 4 avril 2012 (2012-04-04)<br>* alinéa [0001] *<br>* alinéa [0018] *<br>* alinéa [0023] - alinéa [0027]; figures 2A-2D *<br>* alinéa [0029] *<br>* alinéa [0014] * | 1-4,6,8, 11,13<br>5,7,9, 10,12,14 | INV.<br>G01P15/097<br>G01P15/125<br>G01P15/09<br>G01P15/093<br>G01P15/18 |
| Y | US 7 360 422 B2 (UNIV SOUTHERN CALIFORNIA [US]) 22 avril 2008 (2008-04-22)<br>* colonne 10, ligne 27 - ligne 38 * | 5,7,14 | |
| Y | US 2016/282382 A1 (JEANROY ALAIN [FR]) 29 septembre 2016 (2016-09-29)<br>* alinéa [0004] *<br>* alinéa [0005] * | 9 | |
| Y | US 2017/314973 A1 (LEONCINO LUCA [FR] ET AL) 2 novembre 2017 (2017-11-02)<br>* alinéa [0064] - alinéa [0066] * | 10 | |
| Y | EP 0 776 476 A1 (COMMISSARIAT ENERGIE ATOMIQUE [FR]) 4 juin 1997 (1997-06-04)<br>* alinéa [0034] * | 12 | DOMAINES TECHNIQUES RECHERCHES (IPC)<br>G01P |
| E | WO 2020/008157 A2 (COMMISSARIAT ENERGIE ATOMIQUE [FR]) 9 janvier 2020 (2020-01-09)<br>* le document en entier * | 1-4,6, 8-13 | |

Le présent rapport a été établi pour toutes les revendications

| Lieu de la recherche | Date d'achèvement de la recherche | Examinateur |
|---|---|---|
| Munich | 24 mars 2021 | Bossen, Michael |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 20 5748

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-03-2021

| Document brevet cité au rapport de recherche | | | Date de publication | Membre(s) de la famille de brevet(s) | | | Date de publication |
|---|---|---|---|---|---|---|---|
| EP | 2435789 | A1 | 04-04-2012 | EP | 2435789 | A1 | 04-04-2012 |
| | | | | JP | 2012528335 | A | 12-11-2012 |
| | | | | US | 2011030472 | A1 | 10-02-2011 |
| | | | | US | 2015285633 | A1 | 08-10-2015 |
| | | | | US | 2018023952 | A1 | 25-01-2018 |
| | | | | WO | 2010138717 | A1 | 02-12-2010 |
| US | 7360422 | B2 | 22-04-2008 | US | 2006225506 | A1 | 12-10-2006 |
| | | | | US | 2007193353 | A1 | 23-08-2007 |
| | | | | WO | 2006039560 | A2 | 13-04-2006 |
| | | | | WO | 2006039561 | A2 | 13-04-2006 |
| US | 2016282382 | A1 | 29-09-2016 | CN | 105917242 | A | 31-08-2016 |
| | | | | EP | 3071976 | A1 | 28-09-2016 |
| | | | | FR | 3013445 | A1 | 22-05-2015 |
| | | | | RU | 2632264 | C1 | 03-10-2017 |
| | | | | US | 2016282382 | A1 | 29-09-2016 |
| | | | | WO | 2015074817 | A1 | 28-05-2015 |
| US | 2017314973 | A1 | 02-11-2017 | EP | 3244169 | A1 | 15-11-2017 |
| | | | | FR | 3050820 | A1 | 03-11-2017 |
| | | | | US | 2017314973 | A1 | 02-11-2017 |
| EP | 0776476 | A1 | 04-06-1997 | DE | 69617890 | T2 | 08-08-2002 |
| | | | | EP | 0776476 | A1 | 04-06-1997 |
| | | | | FR | 2735580 | A1 | 20-12-1996 |
| | | | | JP | 4139436 | B2 | 27-08-2008 |
| | | | | JP | H10504401 | A | 28-04-1998 |
| | | | | US | 5922955 | A | 13-07-1999 |
| | | | | WO | 9700451 | A1 | 03-01-1997 |
| WO | 2020008157 | A2 | 09-01-2020 | FR | 3083606 | A1 | 10-01-2020 |
| | | | | WO | 2020008157 | A2 | 09-01-2020 |

EPO FORM P0460

Pour tout renseignement concernant cette annexe : voir Journal Officiel de l'Office européen des brevets, No.12/82